# EUROPÄISCHE PATENTANMELDUNG

(11) **EP 0 580 048 A1**
(43) Veröffentlichungstag der Anmeldung: **26.01.1994**
(21) Anmeldenummer: 93111092.8
(22) Anmeldetag: 10.07.1993
(51) Int. Cl.: C03B 3/00

(54) **Vorrichtung zum Einlegen von Chargiermaterial in Glasschmelzöfen**

(30) Priorität: 22.07.1992 DE 4224127
(71) Anmelder: BETEILIGUNGEN SORG GMBH & CO. KG, D-97816 Lohr am Main (DE)
(72) Erfinder: Bucar, Matjaz, D-97783 Karsbach (DE)
(74) Vertreter: Zapfe, Hans, Dipl.-Ing.

(57) **Zusammenfassung**

Eine Einlegevorrichtung (4) zur Aufgabe und Verteilung von Chargiermaterial durch eine Einlegeöffnung (11) auf die Schmelzbadoberfläche (24) von Glasschmelzöfen (1) besitzt ein bewegliches Gestell (10), das einen Chargenbehälter (21), eine Einlegeschurre (22) mit einer in die Schmelze eintauchbaren Schieberfläche (23) aufweist. Ein Schurrenantrieb (31) mit mindestens einer Antriebsstange (25) dient zur Erzeugung einer Förder- und Schiebebewegung. Ferner ist ein die Einlegeöffnung (11) im wesentlichen abdeckender Hitzeschild (12) mit einer Ausnehmung (14) vorhanden, durch die die Einlegeschurre (22) beweglich hindurchgeführt ist. Zur Verbesserung der Ofenabdichtung ist
a) die Einlegeschurre (22) von einer Chargierkammer (16) umgeben, die über eine erste Öffnung (18) abgedichtet mit dem Randbereich der Ausnehmung (14) im Hitzeschild (12) und über eine zweite Öffnung (20) abgedichtet mit dem Chargenbehälter (21) verbunden ist, und ferner ist
b) der Schurrenantrieb (31) außerhalb der Chargierkammer (16) angeordnet, wobei die mindestens eine Antriebsstange (25) über jeweils eine Stopfbuchsdurchführung (27) in die Chargierkammer (16) eingeführt und dort mit der Einlegeschurre (22) verbunden.

## Beschreibung

Die Erfindung betrifft eine Einlegevorrichtung zur Aufgabe und Verteilung von Chargiermaterial durch eine Einlegeöffnung auf die Schmelzbadoberfläche von Glasschmelzöfen mit eine beweglichen Gestell, das einen Chargenbehälter, eine Einlegeschurre mit einer in die Schmelze eintauchbaren Schieberfläche, einen Schurrenantrieb mit mindestens einer Antriebsstange für die Erzeugung einer Förder- und Schiebebewegung und einen die Einlegeöffnung im wesentlichen abdeckenden Hitzeschild mit einer Ausnehmung aufweist, durch die die Einlegeschurre beweglich hindurchgeführt ist.

Die Abdichtung zwischen dem Glasschmelzofen und der Einlegevorrichtung ist eine seit langem bekannte Problemzone. Einerseits soll der Austritt von Hitze und Staub aus den Glasschmelzöfen verhindert werden, um das Arbeitsklima für die Bedienungspersonen und die Funktionssicherheit der Einlegevorrichtung nicht zu beeinträchtigen, andererseits soll auch der Eintritt von Falschluft in die Glasschmelzöfen verhindert bzw. unterdrückt werden.

Die Abdichtung zwischen der Einlegevorrichtung und dem Innenrarn des Ofens, dessen Beschickungszone im Bereich der Einlegevorrichtung in der Regel als sogenanntes "Dog-House" ausgebildet ist, ist insbesondere bei brennstoffbeheizten Glas-Wannenöfen von besonderer Bedeutung. In unzulässigen Mengen angesaugte Falschluft stört den Verbrennungsprozeß, verschlechtert dessen Wirkungsgrad und führt zudem zu einer Abkühlung des Ofeninhalts an der Stelle, an der das Aufschmelzen erfolgen soll. Außerdem vergrößert die Falschluft die Abgasmenge, so daß die Abgasfilter entsprechend größer ausgelegt werden müssen und dennoch einen höheren Strömungswiderstand erzeugen.

Durch die DE-AS 29 44 349 und die dieser entsprechende US-PS 4 197 109 ist eine Einlegevorrichtung der eingangs genannten Gattung bekannt, bei der sich zwischen dem Dog-House und der Einlegevorrichtung eine mehrstufige Schutzvorrichtung befindet, die eine Abdichtung gegenüber der Einlegeschurre im Bereich des ofenseitigen Endes der Schurre bewirken soll. Da die Einlegeschurre in diesem Bereich jedoch zusammengesetzte Bewegungen mit vertikalen und horizontalen Bewegungskomponenten ausführt, enthält die bekannte Schutzvorrichtung zahlreiche flexible Abdichtungselemente auf Gewebebasis, die jedoch starken Beanspruchungen und einem hohen Verschleiß ausgesetzt sind. Unter den Abdichtelementen befinden sich auch solche, bei denen Gleitbewegungen zwischen Metall- und Gewebeteilungen auftreten. Diese sind insbesondere wegen der unvermeidbaren Trockenreibung bei hohen Temperaturen äußerst verschleißanfällig. Außerdem ist noch an einer weiteren Stelle eine Abdichtung durchzuführen, nämlich zwischen dem Chargenbehälter und der inneren Oberfläche der Einlegeschurre, die einen trogförmigen Querschnitt besitzt. Diese zusätzliche Abdichtung wird durch eine schwenkbare Platte gebildet, die Teil einer sogenannten "Sanddichtung" ist. Auch diese Dichtungszone ist wegen der ständigen Trockenreibung des mechanisch sehr aggressiven Beschickungsmaterials, des sogenannten Gemenges, gleichfalls sehr verschleißanfällig. Außerdem ist die gleichzeitige Abdichtung auf dem Gesamtumfang wegen der verschiedenen Freiheitsgrade in den relativen Bewegungen nicht ausreichend zuverlässig herzustellen. Das hintere Ende der Einlegeschurre ragt ungeschützt in die Atmosphäre.

In Erkenntnis des hohen Verschleißes im Bereich zwischen dem Chargenbehälter und der Schurrenoberfläche empfiehlt die US-PS 4 545 717 eine solche Steuerung des dort befindlichen Absperrschiebers, daß dieser bei der Vorwärtsbewegung der Schurre angehoben und bei deren Rückwärtsbewegung auf die Schurrenoberfläche abgesenkt wird. In der genannten Druckschrift wird jedoch die Gesamtabdichtung nicht angesprochen, und auch die beschriebene Steuerung des Abstreifschiebers hat nur sehr begrenzte Auswirkungen, weil nämlich der mechanische Verschleiß der Schurre bei deren Rückzugsbewegung besonders groß ist, weil nämlich der Inhalt des Chargenbehälters hierbei gegen den Absperrschieber gepreßt wird. Wie bereits gesagt, sind Maßnahmen zur vollständigen Abdichtung des Ofeninnenraums gegenüber der Einlegevorrichtung nicht offenbart.

Der Erfindung liegt daher die Aufgabe zugrunde, eine Einlegevorrichtung der eingangs beschriebenen Gattung dahingehend zu verbessern, daß der Verschleiß der beweglichen Teile bei gleichzeitiger Verbesserung der Abdichtwirkung vermindert wird.

Bei der Bewertung dieser Aufgabe ist zu berücksichtigen, daß beim Stande der Technik, soweit sich dieser überhaupt mit abgedichteten Durchführungen durch den Hitzeschild befaßt, die erforderlichen Freiheitsgrade einerseits und die gute Abdichtwirkung andererseits einander diametral entgegenstehen.

Die Lösung der gestellten Aufgabe erfolgt bei der eingangs angegebenen Einlegevorrichtung erfindungsgemäß dadurch, daß
a) die Einlegeschurre von einer Chargierkammer umgeben ist, die über eine erste Öffnung abgedichtet mit dem Randbereich der Ausnehmung im Hitzeschild und über eine zweite Öffnung abgedichtet mit dem Chargenbehälter verbunden ist, und daß
b) der Schurrenantrieb außerhalb der Chargierkammer angeordnet ist, wobei die mindestens eine Antriebsstange über jeweils eine Stopfbuchsdurchführung in die Chargierkammer eingeführt und dort mit der Einlegeschurre verbunden ist bzw. sind.

Mit einer solchen Einlegevorrichtung sind die Vorteile verbunden, daß die Abdichtung nicht mehr - wie beim Stande der Technik - am ofenseitigen Ende der Einlegeschurre erfolgt, sondern daß die Einlegeschurre vollständig innerhalb der Chargierkammer untergebracht ist, so daß die Verbindung zur Atmosphäre soweit wie irgend möglich unterbrochen ist. Dennoch kann die Einlegeschurre gegenüber der Chargierkammer Bewegungen mit mehreren Freiheitsgraden in horizontaler und vertikaler Richtung ausführen, ohne daß hierbei Dichtungselemente auf Biegung oder Trockenreibung im Hochtemperaturbereich beansprucht würden.

Es ist dabei besonders vorteilhaft, wenn die Chargierkammer im wesentlichen quaderförmig ausgebildet ist und auf der dem Hitzeschild abgekehrten Seite eine Stirnwand aufweist, in der die mindestens eine Stopfbuchsdurchführung für jeweils eine Antriebsstange der Einlegeschurre befestigt ist bzw. sind.

Um eine besonders verdrehungssichere Führung der Einlegeschurre zu erreichen, ist diese in besonders vorteilhafter Weise an zwei parallelen Antriebsstangen befestigt.

Der Schurrenantrieb läßt sich dadurch besonders kompakt gestalten, daß er zwischen den beiden Antriebsstangen angeordnet und über ein Joch mit den äußeren Enden der beiden Antriebsstangen verbunden ist. Bei Verwendung eines Druckmittelzylinders kommt man auf diese Weise mit einem einzigen Zylinder aus.

Bezüglich der Chargiereinrichtung ist Kernstück des Abdichtsystems die angegebene Chargierkammer, die sowohl gegenüber dem Hitzeschild als auch gegenüber allen anderen Ein- und Durchführungen abgedichtet ist. Nachzutragen wäre hier, daß selbstverständlich auch die Abdichtung zwischen Chargenbehälter und Chargierkammer gewährleistet ist, und zwar besonders zweckmäßig durch eine flexible Verbindung durch einen Faltenbalg aus hitzebeständigen, insbesondere mineralischen Fasern. Dieser Faltenbalg braucht aber keine großen Relativbewegungen zu überbrücken, sondern dient lediglich zum Ausgleich elastisch oder thermisch bedingter Verformungen innerhalb des Systems.

Es ist weiterhin von Vorteil, wenn unterhalb des Bewegungsbereichs der Hinterkante der Einlegeschurre im Boden der Chargierkammer eine weitere Öffnung angeordnet ist, die abgedichtet mit einem Auffangbehälter für das von der Einlegeschurre rückwärts geförderte Chargiermaterial verbunden ist.

Ferner ist es von Vorteil, wenn der Schurrenantrieb in einem zumindest weitgehend geschlossenen Antriebsgehäuse untergebracht ist, das als Ganzes mit seinen Einbauten von dem beweglichen Gestell abnehmbar ist, ferner, wenn die Chargierkammer mit der Einlegeschurre und dem Schurrenantrieb als Ganzes von dem beweglichen Gestell abnehmbar ist.

Sowohl das Antriebsgehäuse als auch die Chargierkammer stellen mit allen eingebauten Elementen Module dar, so daß die gesamte Einlegevorrichtung leicht um- oder nachgerüstet werden kann und im übrigen auch sehr bedienungs- und wartungsfreundlich ist.

Weitere vorteilhafte Ausgestaltungen des Erfindungsgegenstandes ergeben sich aus den übrigen Unteransprüchen, deren vorteilhafte Einzelmerkmale in der nachfolgenden Detailbeschreibung und anhand der Figuren 1 bis 3 anhand eines Ausführungsbeispieles näher erläutert werden.

Es zeigen:
- Figur 1: einen vertikalen Längsschnitt durch einen Teil eines Glasschmelzofens im Bereich des Dog-House in Verbindung mit einem Längsschnitt in gleicher Ebene durch die Einlegevorrichtung,
- Figur 2: einen teilweisen Horizontalschnitt durch den Gegenstand von Figur 1 im Bereich des Dog-House sowie im oberen Bereich der Chargierkammer mit einer Draufsicht auf den Schurrenantrieb bei abgenommenem Deckel des Antriebsgehäuses, und
- Figur 3: einen vertikalen Querschnitt durch den Gegenstand von Figur 1 im Bereich der Schnittlinie III-III, d.h. im Bereich des Dog-House mit Blick auf die Einlegeschurre in leicht vergrößertem Maßstab.

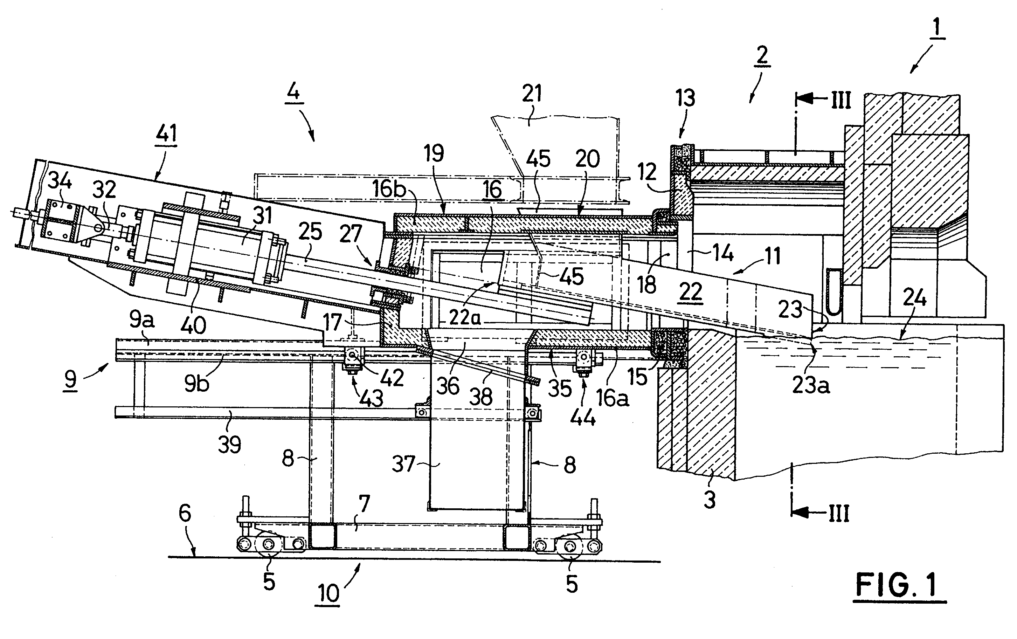

In Figur 1 ist derjenige Teil eines Glasschmelzofens 1 dargestellt, an den sich das sogenannte Dog-House 2 anschließt. Es handelt sich um bekannte Konstruktionsdetails von Glasschmelzöfen mit einer Schmelzwanne 3, so daß sich ein weiteres Eingehen hierauf erübrigt.

An das Dog-House 2 stößt eine Einlegevorrichtung 4 an, die in Richtung der Ofen-Längsachse mittels Fahrrollen 5 auf Schienen 6 verfahrbar ist. Die Fahrrollen 5 sind höhenverstellbar an einem Grundrahmen 7 befestigt, der über Tragsäulen 8 mit einer Montageplattform 9 verbunden ist, auf der die nachstehend noch näher beschriebenen Teile und Baugruppen befestigt sind. Grundrahmen und Montageplattform bilden das sogenannte bewegliche Gestell 10, mit dem die Einlegevorrichtung 4 an die Einlegeöffnung 11 des Glasschmelzofens 1 heranfahrbar ist. Diese Einlegeöffnung 11 gehört zu dem Dog-House 2 und ist im Schmelzbetrieb des Ofens durch einen Hitzeschild 12 verschlossen.

Der Hitzeschild 12 gehört zur Einlegevorrichtung 4 und ist mit dem Dog-House 2 auf dem Umfang der Einlegeöffnung 11 durch eine Dichtungspackung 13 verbunden. Im Hitzeschild 12 befindet sich eine Ausnebmung 14, in deren Randbereich über eine weitere Dichtungspackung 15 eine Chargierkammer 16 angesetzt ist, die im wesentlichen quaderförmig ausgebildet und auf ihrer dem Dog-House 2 abgekehrten Seite durch eine Stirnwand 17 verschlossen ist. Auf der dem Dog-House zugekehrten Seite besitzt die Chargierkammer 16 eine erste Öffnung 18, die im wesentlichen mit der Ausnehmung 14 fluchtet. In einer Decke 19 der Chargierkammer 16 befindet sich, hier nicht näher hervorgehoben, eine zweite Öffnung 20, die abgedichtet mit einem Chargenbehälter 21 verbunden ist, von dem hier nur strichpunktiert der untere Teil angedeutet ist. Die Chargierkammer 16 besteht aus einem metallischen Gehäuse 16a, das mit einer keramischen Auskleidung 16b versehen ist.

Im Innern der Chargierkammer 16 befindet sich mit dem größten Teil ihrer Länge eine Einlegeschurre 22, die einen trogförmigen Querschnitt aufweist und mit ihrem vorderen Ende in das Dog-House 2 hineinragt. Der Boden der Einlegeschurre 22 besitzt in Längsrichtung die für derartige Schurren übliche Neigung. Die Einlegeschurre 22 besitzt an ihrem vorderen Ende eine Schieberfläche 23, die nach unten hin durch eine waagrechte Kante 23a begrenzt ist, die parallel zur Schmelzbadoberfläche 24 verläuft.

Durch hin- und hergehende Bewegung der Einlegeschurre 22 parallel zu ihrem Boden sowie durch die in der Zeichnung dargestellte räumliche Anordnung der Einlegeschurre gegenüber der Schmelzbadoberfläche 24 taucht die Schieberfläche 23 mit der Unterkante 23a alternierend aus der Schmelzbadoberfläche aus und wieder in diese ein. Beim Rückzug der Einlegeschurre wird ein Teil des auf dieser befindlichen Chargiermaterials auf der Schmelzbadoberfläche abgelegt und beim Vorschub in Richtung auf die gegenüberliegende Ofenwand bewegt. Durch die Überlagerung von Horizontal- und Vertikalbewegungen wird das Chargiermaterial gleichzeitig in einzelne, auf der Glasschmelze schwimmende Streifen unterteilt, die allmählich in die Glasschmelze absinken und aufgeschmolzen werden. Diese Art des Schmelzbetriebes ist jedoch bekannt und bedarf daher keiner weiteren Erläuterung. Wesentlich ist hierbei jedoch, daß die Einlegeschurre 22 mit der Schieberfläche 23 eine Baueinheit bildet, d.h. es ist kein von der Einlegeschurre getrennter Schieber vorhanden, wie dies von anderen Einlegevorrichtungen her bekannt ist.

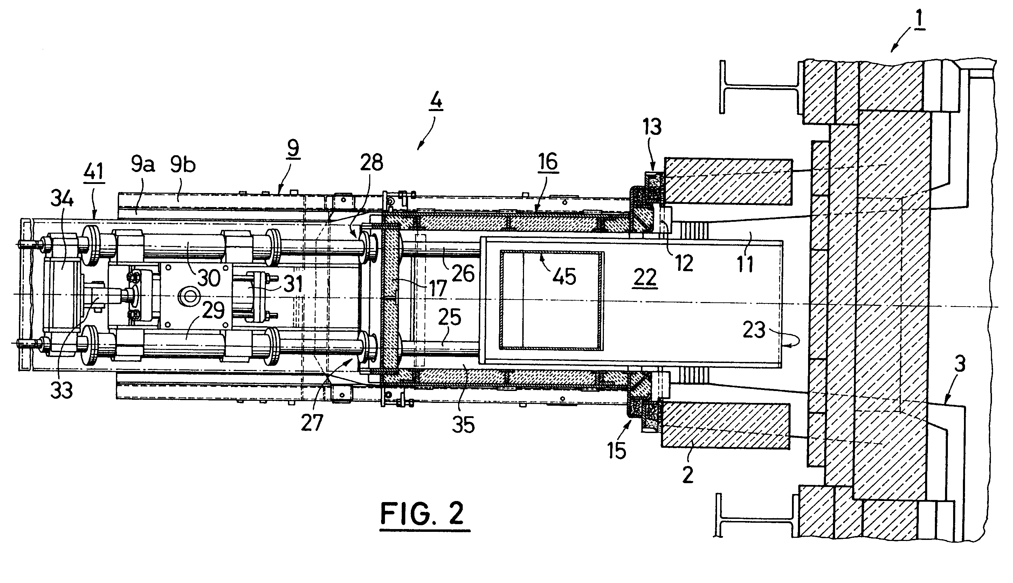

Die Einlegeschurre 22 ist, wie deutlicher aus Figur 2 hervorgeht, an zwei Antriebsstangen 25 und 26 mit Kreisquerschnitt befestigt, die mittels zweier Stopfbuchsdurchführungen 27 und 28 durch die Stirnwand 17 der Chargierkammer 16 hindurchgeführt sind. Die ofenseitigen Enden der parallel zueinander und parallel zum Boden der Einlegeschurre 22 verlaufenden Antriebsstangen 25 und 26 sind innerhalb der Chargierkammer 16 fest mit der Einlegeschurre 22 verbunden.

Die jeweils anderen Enden der Antriebsstangen 25 und 26 sind in je einem Lagerkörper 29 bzw. 30 längsverschieblich gelagert, zwischen denen sich ein Schurrenantrieb 31 befindet. Dieser ist als Druckmittelzylinder ausgeführt und besitzt eine Kolbenstange 32, die über ein Gelenk 33 mit einem Joch 34 verbunden ist, das fest mit den beiden Enden der Antriebsstangen 25 und 26 verbunden ist.

Es ist aus den Figuren 1 und 2 zu entnehmen, daß die Einlegeschurre 22 an den beiden Antriebsstangen 25 und 26 fliegend gehalten ist. Bei alternierender Beaufschlagung des Schurrenantriebs 31 führt daher die Einlegeschurre 22 mit niedriger Frequenz hin- und hergehende Bewegungen aus. Unterhalb des Bewegungsbereichs der hinteren, waagrechten Unterkante 22a befindet sich, wie aus Figur 1 hervorgeht, im Boden 35 der Chargierkammer 16 eine weitere Öffnung 36, die abgedichtet mit einem Auffangbehälter 37 für das von der Einlegeschurre 22 rückwärts und "bergauf" geförderte Chargiermaterial verbunden ist. Zwischen dem Auffangbehälter 37 und dem Boden 35 befindet sich eine schräg nach hinten oben ansteigende Trennfuge 38, die zwischen zwei nicht näher bezeichneten Flanschen liegt, und über die der Auffangbehälter 37 zum Zwecke seiner Entleerung von der Chargierkammer 16 getrennt werden kann. Zu diesem Zweck besitzt das fahrbare Gestell 10 Fahrschienen 39, auf denen der Auffangbehälter 37 mittels nicht näher bezeichneter Fahrrollen von der Chargierkammer 16 weg verfahrbar ist.

Figur 1 ist weiterhin zu entnehmen, daß der Schurrenantrieb 31 auf einer Tragstruktur 40 befestigt ist, die ihrerseits Teil eines geschlossenen Antriebsgehäuses 41 ist, das als Einheit mit seinen Einbauten von dem beweglichen Gestell 10 abnehmbar ist. Dieses Antriebsgehäuse 41 ist mit dem Schurrenantrieb 31 fliegend am Chargiergehäuse 16 befestigt. Chargierkammer, Einlegeschurre und Schurrenantrieb sind wiederum als Einheit von dem beweglichen Gestell 10 abnehmbar. Außerdem ist die Chargierkammer 16 mittels Rollen 42 in Längsrichtung der Einlegeschurre 20 auf der Montageplattform 9 verfahrbar. Dies geschieht mittels zu den Längsträgern 9a paralleler Fahrschienen 9b, an denen die verfahrbare Baugruppe durch Klemmvorrichtungen 43 und 44 feststellbar ist.

Zu Figur 1 wäre noch auszuführen, daß sich zwischen dem Chargenbehälter 21 und der Einlegeschurre 22 noch ein Trichter 45 befindet, der in den von der Einlegeschurre 22 umschlossenen Hohlraum hineinragt.

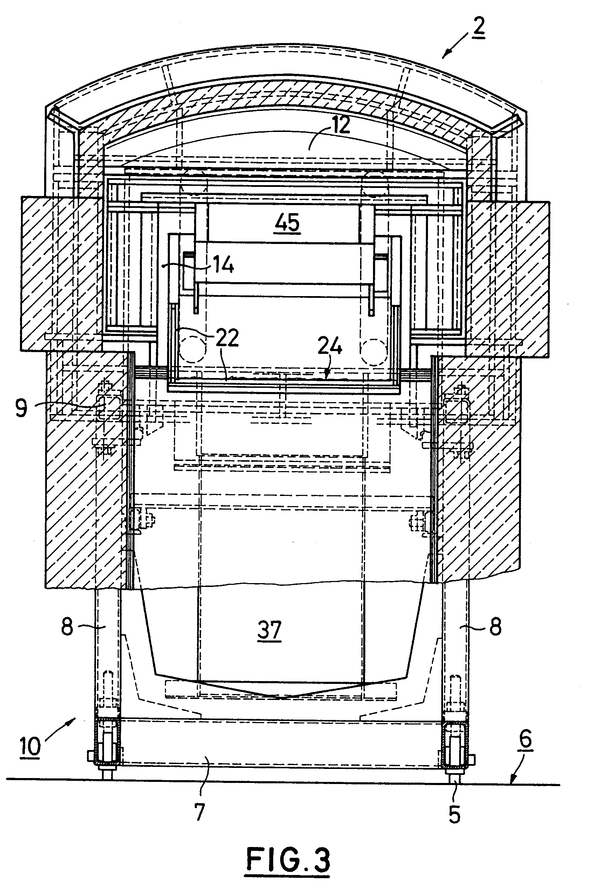

Figur 3 zeigt - mit waagrechter Blickrichtung aus dem Dog-House - die senkrecht geschnittene, trogförmige Einlegeschurre 22 in Relation zur Schmelzbadoberfläche 24. Es ist auch erkennbar, daß die Einlegeschurre 22 mit entsprechenden seitlichen Abständen von feststehenden Bauteilen durch die Ausnehmung 14 im Hitzeschild 12 hindurchgeführt ist. Soweit Figur 3 weitere Bezugszeichen enthält, entsprechen diese denjenigen in den Figuren 1 und 2.

## Patentansprüche

1. Einlegevorrichtung (4) zur Aufgabe und Verteilung von Chargiermaterial durch eine Einlegeöffnung (11) auf die Schmelzbadoberfläche (24) von Glasschmelzöfen (1) mit einem beweglichen Gestell (10), das einen Chargenbehälter (21), eine Einlegeschurre (22) mit einer in die Schmelze eintauchbaren Schieberfläche (23), einen Schurrenantrieb (31) mit mindestens einer Antriebsstange (25, 26) für die Erzeugung einer Förder- und Schiebebewegung und einen die Einlegeöffnung (11) im wesentlichen abdeckenden Hitzeschild (12) mit einer Ausnehmung (14) aufweist, durch die die Einlegeschurre (22) beweglich hindurchgeführt ist,
**dadurch gekennzeichnet**, daß
a) die Einlegeschurre (22) von einer Chargierkammer (16) umgeben ist, die über eine erste Öffnung (18) abgedichtet mit dem Randbereich der Ausnehmung (14) im Hitzeschild (12) und über eine zweite Öffnung (20) abgedichtet mit dem Chargenbehälter (21) verbunden ist, und daß
b) der Schurrenantrieb (31) außerhalb der Chargierkammer (16) angeordnet ist, wobei die mindestens eine Antriebsstange (25, 26) über jeweils eine Stopfbuchsdurchführung (27, 28) in die Chargierkammer (16) eingeführt und dort mit der Einlegeschurre (22) verbunden ist.

2. Einlegevorrichtung nach Anspruch 1, **dadurch gekennzeichnet**, daß die Chargierkammer (16) im wesentlichen quaderförmig ausgebildet ist und auf der dem Hitzeschild (12) abgekehrten Seite eine Stirnwand (17) aufweist, in der die mindestens eine Stopfbuchsdurchführung (27, 28) für jeweils eine Antriebsstange (25, 26) der Einlegeschurre (22) befestigt ist.

3. Einlegevorrichtung nach Anspruch 1, **dadurch gekennzeichnet**, daß die Einlegeschurre (22) an zwei parallelen Antriebsstangen (25, 26) befestigt ist.

4. Einlegevorrichtung nach Anspruch 1**, dadurch gekennzeichnet**, daß die Einlegeschurre (22) an der mindestens einen Antriebsstange (25, 26) fliegend gehalten ist.

5. Einlegevorrichtung nach Anspruch 2, **dadurch gekennzeichnet**, daß der Schurrenantrieb (31) zwischen den beiden Antriebsstangen (25, 26) angeordnet und über ein Joch (34) mit den äußeren Enden der beiden Antriebsstangen verbunden ist.

6. Einlegevorrichtung nach Anspruch 5, **dadurch gekennzeichnet**, daß beiderseits des Schurrenantriebs (31) je ein Lagerkörper (29, 30) für die Längsführung der Antriebsstangen (25, 26) angeordnet ist.

7. Einlegevorrichtung nach Anspruch 1, **dadurch gekennzeichnet**, daß unterhalb des Bewegungsbereichs der Hinterkante (22a) der Einlegeschurre (22) im Boden (35) der Chargierkammer (16) eine weitere Öffnung (36) angeordnet ist, die abgedichtet mit einem Auffangbehälter (37) für das von der Einlegeschurre (22) rückwärts geförderte Chargiermaterial verbunden ist.

8. Einlegevorrichtung nach Anspruch 7, **dadurch gekennzeichnet**, daß der Auffangbehälter (37) über eine schräg nach hinten oben ansteigende Trennfuge (38) lösbar mit der Chargierkammer (16) verbunden ist.

9. Einlegevorrichtung nach Anspruch 1, **dadurch gekennzeichnet**, daß der Schurrenantrieb (31) in einem zumindest weitgehend geschlossenen Antriebsgehäuse (41) untergebracht ist, das als Einheit mit seinen Einbauten von dem beweglichen Gestell (10) abnehmbar ist.

10. Einlegevorrichtung nach Anspruch 9, **dadurch gekennzeichnet**, daß das Antriebsgehäuse (41) mit dem Schurrenantrieb (31) fliegend am Chargiergehäuse (16) befestigt ist.

11. Einlegevorrichtung nach Anspruch 1, **dadurch gekennzeichnet**, daß die Chargierkammer (16) mit der Einlegeschurre (22) und dem Schurrenantrieb (31) als Einheit von dem beweglichen Gestell (10) abnehmbar ist.

12. Einlegevorrichtung nach den Ansprüchen 9 und 11, **dadurch gekennzeichnet**, daß das bewegliche Gestell (10) eine von einem Grundrahmen (7) beabstandete, aus Längsträgern (9a) gebildete, waagrechte Montageplattform (9) für das Antriebsgehäuse (41) und die Chargierkammer (16) mit der Einlegeschurre (22) besitzt.

13. Einlegevorrichtung nach Anspruch 7, **dadurch gekennzeichnet**, daß das fahrbare Gestell (10) Fahrschienen (39) besitzt, auf denen der Auffangbehälter (37) von der Chargierkammer (16) weg verfahrbar angeordnet ist.

14. Einlegevorrichtung nach Anspruch 1**, dadurch gekennzeichnet**, daß die Chargierkammer (16) mit einer hitzebeständigen keramischen Auskleidung (16b) versehen ist.

15. Einlegevorrichtung nach Anspruch 12, **dadurch gekennzeichnet**, daß die Chargierkammer (16) mittels Rollen (42) in Längsrichtung der Einlegeschurre (22) auf der Montageplattform (9) verfahrbar und durch Klemmvorrichtungen (43, 44) feststellbar ist.
